# EUROPEAN PATENT APPLICATION

(11) **EP 1 826 449 A2**
(43) Date of publication of application: **29.08.2007**
(21) Application number: 07003989.6
(22) Date of filing: 27.02.2007
(51) Int. Cl.: F16D 65/18, F16D 65/21

(54) **Disc Brake**

(30) Priority: 27.02.2006 US 307896
(71) Applicant: ROBERT BOSCH CORPORATION, Broadview, Illinois 60155 (US)
(72) Inventor: Mackiewicz, John E., Niles, MI 49120 (US); Penninger, William J., Niles, MI 49120 (US); McClain, Richard B., South Bend, IN 46617 (US)
(74) Representative: Costello-Saile, Thomas Johannes

(57) **Abstract**

A disc brake (10) has a first caliper with first and second friction members (60,60') that are moved into engagement with a rotor (46) to effect a brake application. The actuator includes a second caliper (100) retained on a pin (200) and third and fourth friction member (150,150') aligned with the rotor. First and second linkage members (70,70') connect the second caliper to the first and second friction members. The second caliper when activated moves the third and fourth friction members into engagement with the rotor to create a tangential force that causes the second caliper to pivot on the pin and provide an input force that moves first and second ramp surfaces (48,50) on the first and second linkage members to produce an actuation force that moves the first and second friction members into engagement with the rotor to produce a braking force that retards the rotation of the rotor.

## Description

This invention relates to a disc brake having a caliper fixed to a support member in which first and second friction members are moved into engagement with a rotor during a brake application and a second caliper with third and fourth friction member that are moved by an actuator into engagement with the rotor to create a tangential force that moves a ramped surface to develop the actuation force for moving the first and second friction members to effect a brake application.

### BACKGROUND OF THE INVENTION

In disc brakes, it is common for a caliper to straddle a rotor that is fixed to an axle of a vehicle wherein the caliper is fixed to a yoke that is secured to the housing of the vehicle and has a bore therein that retains an actuation piston to define an actuation chamber. A first friction member is connected to the actuation piston while a second friction member is connected to an arm that extends from the caliper. The first and second friction members are located on opposite sides of the rotor and when pressurized fluid is supplied to the actuation chamber, the piston and caliper move in opposite directions such that the first and second friction members engage the rotor to effect a brake application. The following U.S. Patents may be considered as illustrative of such disc brake and their corresponding functional operation: 3,113,643; 4,530,423; 6,000,506 and 6,454,056. In these disc brakes pressurize fluid provides the force through which an input is developed to effect a brake application. In an effort to simplify a brake system it has been suggested in U.S. Patent 4,793,447 that an electric motor may be used as the source of providing an input to effect a brake application. In this disc brake the intensity and the speed through which an input force is applied to move friction members into engagement with a rotor is a function of a sun gear arrangement. Because of the physical size of an electric motor needed to effect a brake application in a manner equivalent to that of a hydraulically activated brake this type of electric operated disc brake has not received sufficient support to establish commercial success.

It has been known from U.S. Patent 3,662,864 that a disc brake used for parking may be manually activated through the use of a wedge arrangement to effect a brake application that meets braking standards for a vehicle. This wedge actuation arrangement has been incorporated into an electromechanical brake in U.S. Patents 6,318,513 and 6,957,723 and a relative small electric motor used to move a wedge and provide input to operate a sliding caliper disc brake. In this type brake the output force of the electric motor is augmented by a wrap around force that is a function of the input force. This is wrap around or servo force created by a dragging action of the friction material that increases the normal force on the same friction material through the wedge. This increase in normal force is due to servo action and is dependent on the coefficient of friction between the friction material and the rotor. Should the friction couple increase to a predetermined level, the wrap around force will exceed the capability of the electric motor to withdraw the wedge and increase until the rotor comes to an abrupt stop. Such braking is uncontrolled and results in selfi-locking of the rotor which is unacceptable for the operation of most vehicle. The gain factor of this type brake may be modified by using a low power input or reducing the slope of the wedge and resulting friction pad, neither of which is acceptable as a high gain is desired to effect to need current braking standards.

### SUMMARY OF THE INVENTION

The present invention relates to a brake wherein a first plurality of friction members are moved into engagement with a rotor to create a tangential input force that communicated through a wedge or ramp connection and converted into a actuation force that moves a second plurality of friction members into engagement with the rotor to effect a brake application with the resistance to the engagement of the second plurality of friction member being carried through the friction member and into the housing for the second plurality of friction members to retard the rotation of the rotor and effect a brake application.

In more particular detail the disc brake of the present invention includes a first caliper that is fixed to stationary member on a vehicle wherein first and second friction member are aligned with a rotor and moved into engagement with a rotor during a brake application by an input force applied through a actuation arrangement and created through the engagement of third and fourth friction members with the rotor. The actuation arrangement includes a second caliper that retains the third and fourth friction members in alignment with the rotor and is connected to the stationary member a pin. A first linkage member attached to the second caliper is connected to the first friction member through a first ramp surface while a second linkage member attached to the second caliper is connected to the second friction member through a second ramp surface. An actuator, defined by an electric motor that is retained in the second caliper that responds to an operation input to effect a brake application, acts on and moves the third friction member into engagement with rotor and at the same time the second caliper pulls the fourth friction member into engagement with the rotor. With the rotor moving engagement of the third and fourth friction members with the rotor creates a rotary force causes the second caliper to pivot on the pin and provide a tangential input force that is communicated into the first and second linkage members. The input force move the first and second ramp surfaces into engagement with the first and second friction members such that an actuation force thereafter moves the first and second friction members into engagement with rotor to produce a braking force. The resistance to the engagement of the first and second friction member with the rotor and retard the rotation thereof is reacted into the first caliper during a brake application. On termination of the operational input to the actuator, the actuator moves the third and fourth friction members away from the rotor and first springs center the second caliper to a position of rest such that the first and second linkage member retract the first and second ramp surfaces from engagement with the first and second friction members and second springs move the first and second friction members away from the rotor to allow the rotor thereafter freely rotate.

An advantage of the invention is in providing a self energizing brake wherein a servo force has been eliminated and thus locking of the friction members with a rotor is also been eliminated.

A further advantage of this invention resided in a brake wherein a tangential input force derived through engagement of friction pads with a rotor is transmitted through a ramp arrangement and converted into a normal force that acts on and moves friction pads into engagement with the rotor to effect a brake application by retarding the rotation of the rotor.

### BRIEF DESCRIPTION OF THE DRAWINGS

Figure 1 is a front perspective view of a disc brake and rotor according to the present invention;
Figure 2 is a top view of the disc brake of Figure 1 with a sectional view of a portion a ramped arrangement of the disc brake;
Figure 3 is a view taken along line 3-3 of Figure 2;
Figure 4 is a side view taken along line 4-4 of Figure 1;
Figure 5 is an end view taken along line 5-5 of Figure 4;
Figure 6 is an end view taken along line 6-6 of Figure 4;
Figure 7 is a side view taken along line 7-7 of Figure 1;
Figure 8 is a view taken along line 8-8 of Figure 7;
Figure 9 is a view taken along line 9-9 of Figure 7;
Figure 10 is a view taken along line 10-10 of Figure 9;
Figure 11 is a view taken along line 11-11 of Figure 7;
Figure 12 is a partial sectional view of the components for a disc brake illustrated in Figure 2 during a brake application when the rotor is rotating in a first direction indicated by the arrow;
Figure 13 is a partial sectional view of the components for a disc brake illustrated in Figure 2 during a brake application when the rotor is rotating in a second direction indicated by the arrow; and
Figure 14 is a partial sectional view of the components for a disc brake illustrated in Figure 2 after wear has reduced the thickness of the friction members.

### DETAILED DESCRIPTION

In the specification where similar components are used the component may be identified by a number or a same number plus ' depending on a relationship with other components.

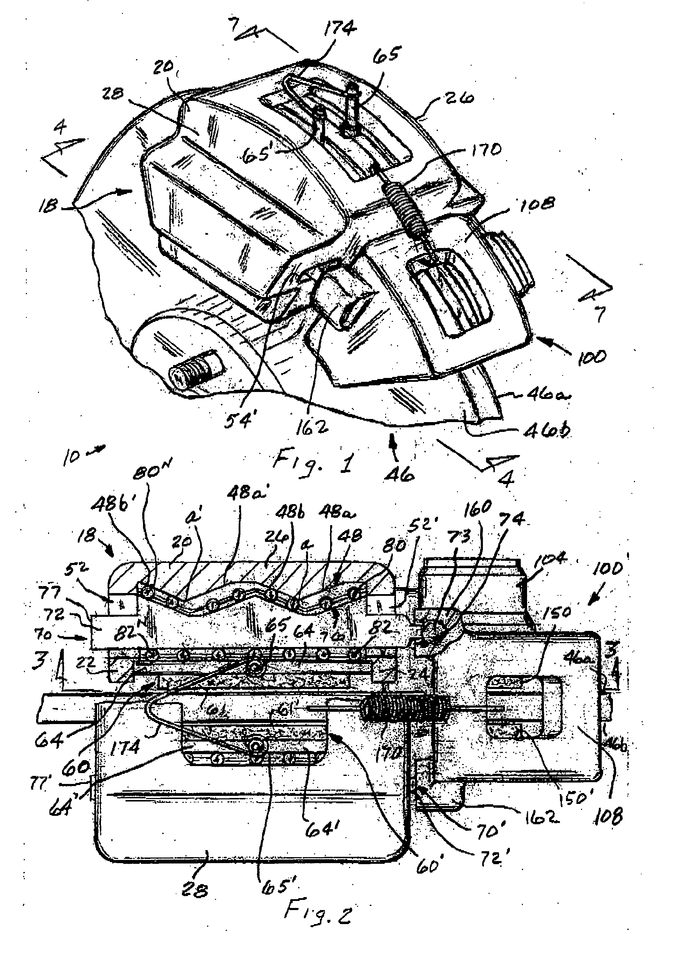

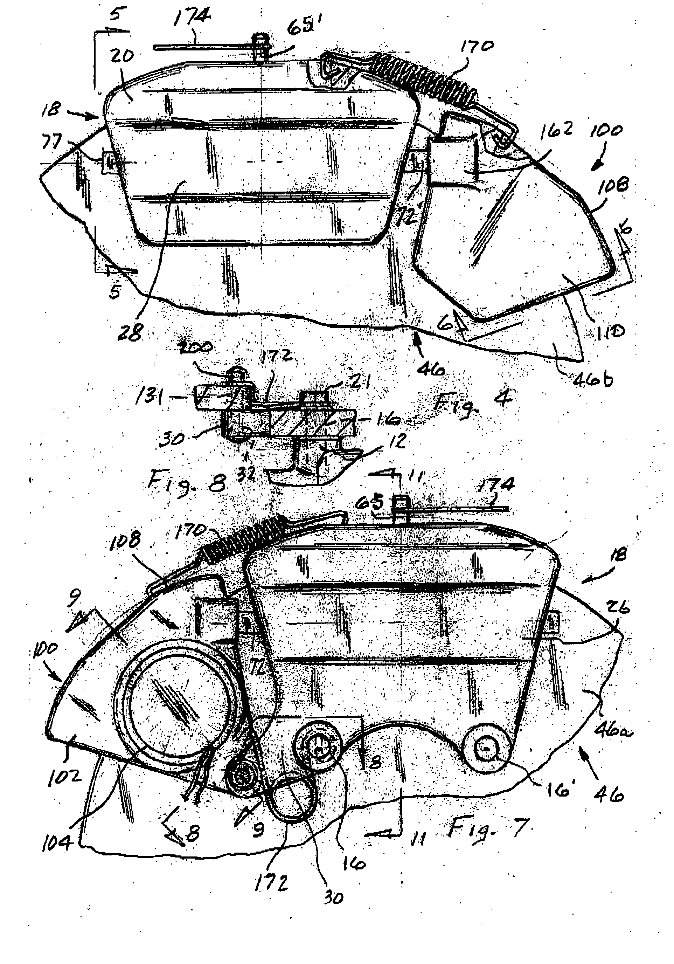

The disc brake 10 shown in Figure 1 is made according to the present invention and is fixed to a support 12 for a wheel and axle of a vehicle by bolts 21 (only one is shown), see Figure 11, that extend through openings 16, 16' in an anchor bracket 18 through which braking forces are transmitted into the support 12 during a brake application. The attachment of the anchor bracket 18 with the support 12 functions to retain the components of the disc brake 10 in a desired relationship with respect to a rotor 46 that is attached to a wheel of the vehicle.

The anchor bracket 18, as best illustrated in Figures 1,2, 3, 4 and 7, is an integrally cast rectangular member that defines a housing 20 for a fixed caliper having a first rail 22 that is separated from a second rail 24 by parallel first 26 and second 28 side walls. The first side wall 26 is distinguished by a projection 30 that extends there from that has and has an axial opening 32 there through that is parallel with the first 22 and second 24 rails. In addition, the first rail 22 has first 38 and second 40 slots that are located in perpendicular alignment with the first 26 and second 28 side walls and the second rail 24 has third and fourth slots that are identical to the first 38 and second 40 slots and located in perpendicular alignment with first 26 and second 28 side walls. The first side wall 26 is fixed to support 12 by bolts 21,21' and when so attached to the vehicle locates the first 26 and second 28 side walls in parallel alignment with a first face 46a and a second face 46b on a rotor 46. The first side wall 26 is distinguished by a first ramped surface 48 with peaks a,a' that extends toward the second side wall 28 and the second wall 28 is distinguished by a second ramped surface 50 with corresponding peaks (not shown) that extend toward the first wall 26. The first ramped surface 48 is shown as having two peaks a, a' (the second ramped surface would have the same number) but any even number of peaks would suffice with the slope of the ramps determining a change in a corresponding relationship between an tangential input force and a resultant normal force that is used to provide a braking force for moving first 60 and second 60' friction members toward the rotor 46. The first rail 22 has a first rectangular opening 52 and a second rectangular opening 54 therein while the second rail 24 has complementary first 52' and second 54' rectangular openings therein that extend there through and into the interior of the housing 20 for respectively receiving shafts of linkage members 70,70'.

The first friction member 60 has a carrier member 64 with first ear 66 that is located in the first slot 38 in the first rail 22 and second ear 68 that is located in the third slot 42 in the second rail 24 such that face 61 on the first friction member 60 is aligned with the face 46a on rotor 46. Similarly, a second friction member 60' has a carrier member 64' with a first ear (not shown) that is located in the second slot in the first rail 22 and second ear (not shown) that is located in the fourth slot in the second rail such that face 61' on the second friction member 60' is aligned with the face 46b on rotor 46.

The first linkage member 70 is defined by a push rod that has a rectangular body 72 with a sphere or ball 73 on a first end 74 with a third ramped surface 76 that extends from a second end 77 toward the first end 74. The rectangular body 72 is located in housing 20 and extends through the first rectangular openings 52, 52' in the first 22 and second 24 rails such that the third ramped surface 76 is positioned in complementary alignment with the first ramped surface 48 on the first side wall 26. A first plurality of rollers 80, 80'···80ⁿ are located between the first 48 and third 76 ramped surfaces while a second plurality of rollers 82, 82'···82ⁿ are located between the rectangular body 72 and carrier member 64. The first 80, 80'···80ⁿ and second 82, 82'···82ⁿ plurality of rollers assisting in reducing the frictional resistance to movement of the linkage member 70 with respect to the carrier 64 for the first friction member 60.

Similarly, a second linkage member 70' is defined by a push rod has a rectangular body 72' with a sphere or ball (not shown) on a first end and a fourth ramped surface 78 that extends from a second end 77' toward the first end. The rectangular body 72' is located in housing 20 and extends through the first rectangular openings 54, 54' in the first 22 and second 24 rails such that the fourth ramped surface 78 is positioned in complementary alignment with the second ramped surface 50 on the second side wall 28. A first plurality of rollers 80, 80'···80ⁿ are located between the second 50 and fourth 78 ramped surfaces while a second plurality of rollers 82, 82'···82ⁿ are located between the rectangular body 72' and carrier member 64'. The first 80, 80'···80ⁿ and second 82, 82'···82ⁿ plurality of rollers assisting in reducing the frictional resistance to movement of the linkage member 70 with respect to the carrier 64' for the second friction member 60'.

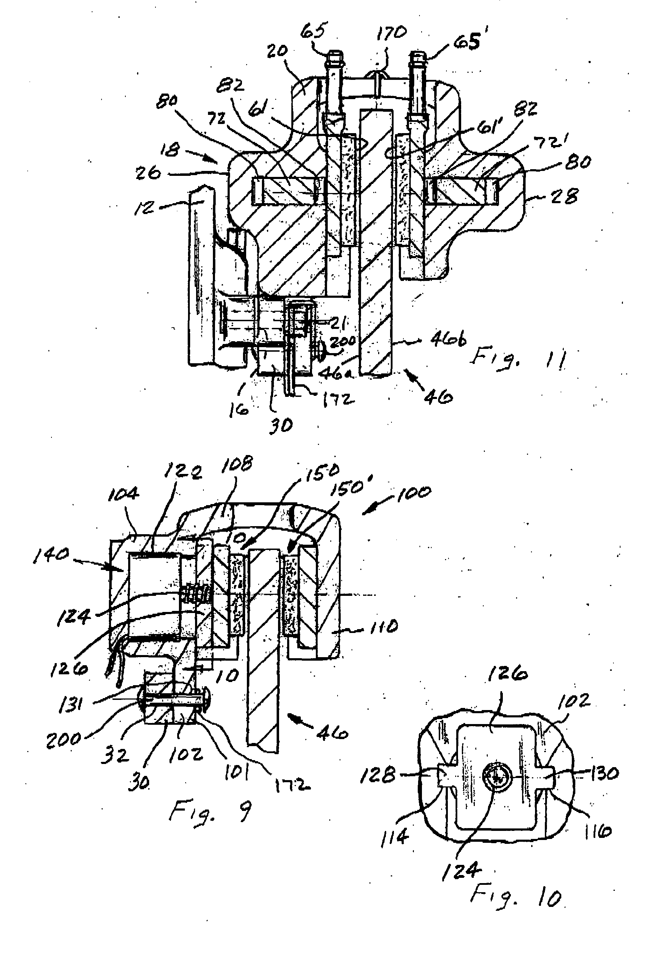

The fixed caliper is connected by the linkage members 70, 70' to a sliding caliper 100. The sliding caliper 100 is defined by a V-shaped housing 102 that has an axial projection 104 that extends there from and a bridge 108 that connects the housing 102 and arm 110, See Figures 1,2,5,6, 9 and 10. The V-shaped housing 102 has first 114 and second 116 slots therein that are parallel with a bore 122 in the axial projection 104 while arm 110 has corresponding third and fourth slots therein that are aligned in a parallel arcuate plane with the first 114 and second 116 slots. The V-shaped housing 102 has a bore 122 for retention of an actuator means 140 defined by an electric motor having a screw arrangement 124 for translating a member 126 along an axis of the bore 122, see Figure 10, The member 126 has toward a first ear 128 located in the first slot 114 and a second ear 130 located in the second slot 116 of the axial projection 104. The V-shaped housing 102 has an axial bore 131 that is located adjacent apex 101 that is parallel with the bore 122 such that when a pin 200 passes through axial bore 131 and is attached to projection 30 on the first side wall 26 of the housing 20, the first 114 and second 116 slots in the axial projection 104 and the third and fourth slots in the arm 110 are perpendicularly aligned with respect to the rotor 46.

A third friction member 150 has a first ear 152 that is located in the first slot 114 and a second ear 154 that is located in the second slot 116 of the axial projection 104 and is connected to member 126 of the actuator means 140 while a fourth friction member 150' has a first ear that is located in the corresponding third slot in arm 110 and a second ear that is located in the fourth slot in arm 110 such that the face on the third friction member 150 and the face on the fourth friction member 150' are located in parallel alignment with rotor 46.

The bridge 108 of the V-shaped housing 102 has a first receptor 160 that receives the sphere or ball 73 on the first end 74 of the rectangular body 72 of the first linkage member 70 and a first receptor 162 that receives a sphere or ball on the first end of the rectangular body 72' of the second linkage member 70',

A first spring 170 is attached the second rail 24 and to bridge 108 of the V-shaped housing 102 such that the V-shaped housing 102 is pulled toward the second rail 24 and a second spring 172 is wrapped around pin 200 and connected to the projection 30 on housing 20 and the V-shaped housing 102 such that the caliper housing 102 is rotated on pin 200 away from the second rail 24, see Figure 8. In a position of rest the first 170 and second 172 hold the V-shaped housing 102 in a neutral position and in addition a coil of spring 172 also acts on housing 102 to move the third friction member 150 and fourth friction member 150' to a retracted position away from the rotor 46 to define a desired running clearance. In addition, a third spring 174 is attached to projection 65 on carrier member 64 of the first friction member 60 and projection 65' on carrier member 64' of the second friction member 60' to move the first 60 and second 60' frictions members away from rotor 46 to define a desired running clearance.

### Mode of Operation

When it is desired to effect a brake application for a vehicle with the disc brake 10, an input is provided to actuator 140 which in this instance is an electrical signal that activates the electric motor causing the screw arrangement 124 to turn and move member 126 and the third friction member 150 toward and into engagement with face 46a on rotor 46. On engagement of the third friction member 150 with face 46a, an axial force is created such that the V-shaped housing 102 slides on pin 200 and the fourth friction member 150' is moved into engagement with face 46b on the rotor 46. Engagement of the third 150 and fourth 150' friction members with respective faces 46a and 46b on rotor 46 create an arcuate moment that after overcoming the centering force of springs 170 and 172 causes the V-shaped housing 102 of the sliding caliper to pivot on pin 200 and supply a tangential actuation input force through the first 70 and second 70' linkage member to move the first 60 and second 60' friction members in the fixed caliper into engagement with rotor 46 to effect a brake application.

In more detail, the tangential input force supplied through the first linkage member 70 is converted into a normal force by the engagement of third ramped surface 76 on the first linkage member 70 with the first ramped surface 48 on the first side wall 26, the engagement occurring through the first plurality of rollers 80,80'···80ⁿ, which acts on and moves carrier 64 by way of the second plurality of rollers 82,82'···82ⁿ and at the same time the tangential input force supplied through the second linkage member 70' is converted into a normal force by the engagement of fourth ramped surface 78 on the second linkage member 70' with the second ramped surface 50 on the second side wall 28 the engagement occurring through the first plurality of rollers 80,80'···80ⁿ, which acts on and moves carrier 64' by way of the second plurality of rollers 82,82'···82ⁿ such that the first friction member 60 and the second friction member 60' engage the rotor 46 to effect a brake application.

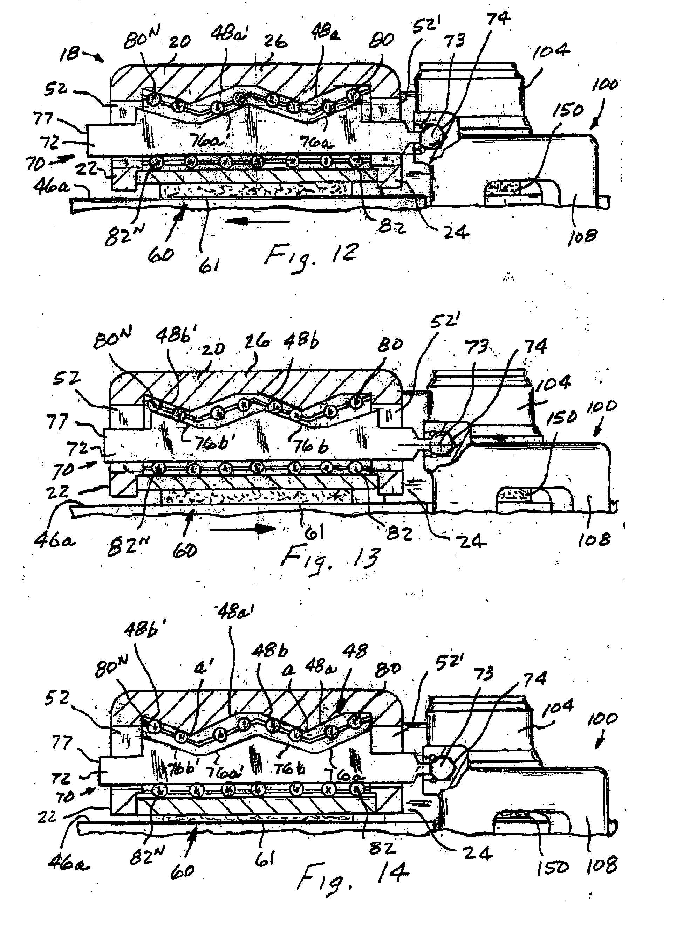

The tangential input force created when the rotor 46 is rotating in a clockwise or forward direction, as illustrated in Figure 12, occurs on engagement of the third 150 and fourth 150' friction members with rotor 46 such that the V-shaped housing 102 rotates and sections 76a,76a' on the third ramped surface 76 of first linkage 70 slides on the first ramped surface 48 to create a normal force that acts on the first friction member 60 to bring face 61 thereon into engagement with face 46a of rotor 46 and sections 78a, 78a' on the fourth ramped surface 78 on the second linkage 70' slides on the second ramped surface 50 to create a normal force that acts on the second friction member 60' to bring face 61' thereon into engagement with face 46b of rotor 46. Engagement of the first 60 and second 60' friction members with rotor 46 create a clamping force that is resisted by a force that is translated into the first rail 22 to retard the rotation of rotor 46 and effect a brake application.

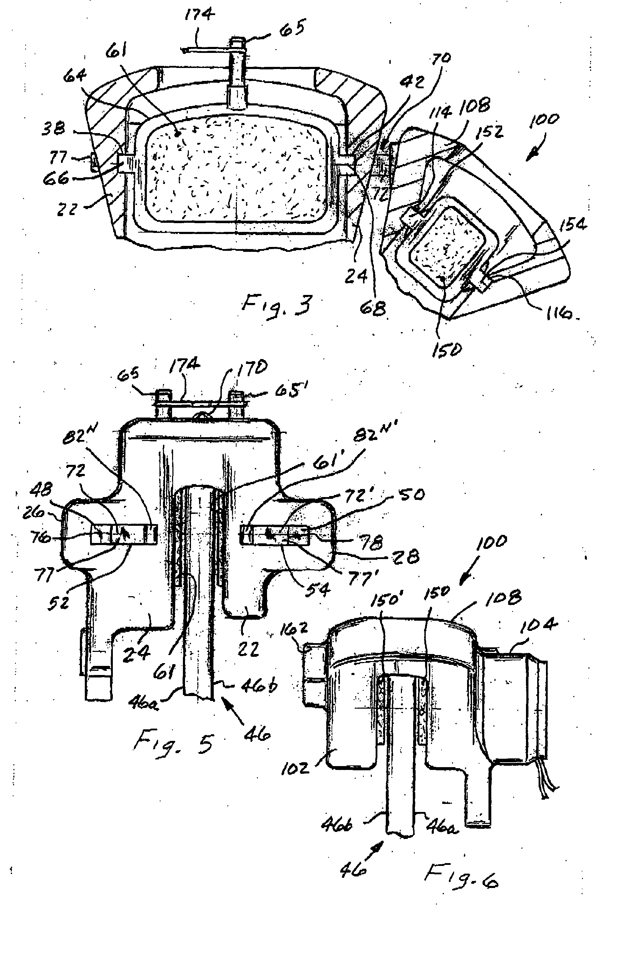

On termination of the electrical input to the electric motor, the first 170 and second 172 springs immediately center the V-shaped housing 102 of the sliding caliper to a position of rest as illustrated in Figure 2 and the first 70 and second 70' linkage members respectively move the third 76 and fourth 78 ramped surfaces back toward the first 26 and second 28 side walls to terminate the normal actuation force acting on the first 60 and 60' friction members and spring 174 thereafter moves the first 60 and second 60' friction members away from rotor 46 to establish the running clearance between the rotor 46 and the first 60 and second 60 friction members.

The tangential input force created when the rotor 46 is rotating in a counter clockwise or reverse direction that occurs on engagement of the third 150 and fourth 150' friction members with rotor 46 to create a tangential input force that causes the V-shaped housing 102 to rotate, in this situation, the first linkage member 70 pulls sections 76a,76a' on the third ramped surface 76 of first linkage 70 into ramped surfaces 48b,48b'; on the first ramped surface 48 to create a normal force that acts on the first friction member 60 to bring face 61 thereon into engagement with face 46a of rotor 46 and at the same time the second linkage member 70' pulls sections 78b, 78b' on the fourth ramped surface 78 on the second linkage member 70' into ramped surfaces 50b.50b' on ramped surface 50 to create a normal force that acts on the second friction member 60' to bring face 61' thereon into engagement with face 46b of rotor 46. Engagement of the first 60 and second 60' friction members with rotor 46 create a clamping force that is resisted by a force that is translated into the first rail 22 to retard the rotation of rotor 46 and effect a brake application.

In brake 10, the actuator means 140 is depicted as being an electric motor but it could be a piston that is retained in bore 122 to define a chamber that is moved in response to pressurized fluid to develop an actuation force to create a corresponding tangential force through the engagement of the third 150 and fourth 150' friction member with rotor 46.

The composition of the material that make up the first 60 and second 60' friction members and the composition of the material that make up the third 150 and fourth 150' friction members may be identical but most often will differ as it may be desirable to aggressively create a tangential force through which the normal actuation force is produced thought the sliding of the ramped surfaces with respect to each other.

With wear of the friction material, movement of the third ramped surface 76 of the first linkage member 70 on the first ramped surface 48 and the fourth ramped surface 78 of the second linkage member 70' on the second ramped surface 50 increases as illustrated in Figure 14. The change in the additional travel is recognized but accounted for as the rectangular body 72, 72' may correspondingly move in the first rectangular openings 52, 52' and in the second rectangular openings 54, 54. Unfortunately the different composition of material in the friction members may wear at different rates but the spherical connection with the housing 102 of the sliding caliper should compensate for such differences and the tangential force is not adversely affected in the development of the normal input force for moving the first 60 and second 60' friction members into engagement with the rotor 46 to effect a brake application.

## Claims

1. A disc brake comprising:
an anchor bracket having a first rail and a second rail that extend from a first side wall to a second side wall to define a substantially rectangular housing, said first rail having first and second slots in perpendicular alignment with said first and second walls and said second rail having third and fourth slots in perpendicular alignment with said first and second walls, said anchor bracket being fixed to a housing of a vehicle to locate said first and second walls in parallel alignment with corresponding first and second faces on a rotor, said first side wall having a first ramped surface thereon and said second wall having a second ramped surface thereon;
a first friction member having a first carrier plate retained by said first and third slots in the first and second rails;
a second friction member having a second carrier plate retained by said second and fourth slots in said first and second rails;
a first linkage member having a third ramped surface thereon located between said first carrier plate and said first ramped surface;
a second linkage member having a fourth ramped surface thereon located between said second carrier plate and said second ramped surface;
a caliper having a housing with an actuation section that is pivotally connected to the housing and an arm that spans the rotor, said first linkage member and said second linkage member being connected to said housing;
a third friction member connected to said actuation section of said caliper and aligned with said rotor;
a fourth friction member connected to said arm of said caliper and aligned with said rotor; and
actuation means connected to said actuation section for moving said third friction member into engagement with the rotor while the actuation section moves said fourth friction member into engagement with the rotor, said engagement of said third and fourth friction member with said rotor creating a tangential force causing said caliper to pivot with respect to said housing and provide an input force that is communicated through said first and second linkage members causing said third and fourth ramped surfaces to respectively move on said first and second ramped surface and apply an actuation force that moves said first and second friction members into engagement with said rotor and produce a braking force that is resisted by the engagement of the first and second carrier members with one of the first and second ends of the support member to correspondingly retard the rotation of the rotor and effect a brake application.

2. The disc brake as recited in claim 1 further including a first plurality of rollers located between said first and third ramped surfaces and a second plurality of rollers located between said third ramped surface and said first carrier member and a third plurality of rollers located between said second and fourth ramped surfaces and a fourth plurality of rollers located between said fourth ramped surface and said second carrier member.

3. The disc brake as recited in claim 1 further including a first slot located in said second end member for receiving said first linkage member and a second slot located in said second end member for receiving said second linkage member said first and second slots allowing translation of said first and second linkage members as said third ramped surface moves with respect to said first ramped surface and said fourth ramped surface moves with respect to said second ramped surface in applying the actuation force to said first and second friction members.

4. The disc brake as recited in claim 1 further including first spring means for moving said caliper to a position of rest on termination of a desired brake application such that the actuation force applied through said third ramped surface on said first linkage member to the first friction member and through said fourth ramped surface on said second linkage member to the second friction member immediately terminates.

5. The disc brake as recited in claim 3 further including a first slot located in said first end member for receiving said first linkage member and a second slot located in said first end member for receiving said second linkage member said first and second slots in said first end member allowing tangential translation of said first and second linkage members as said third ramped surface moves with respect to said first ramped surface and said fourth ramped surface.

6. The disc brake as recited in claim 4 further including second spring means connected to said first and second carrier member for moving said first and second friction member away from said rotor on termination of the actuation force.

7. The disc brake as recited in claim 1 wherein said tangential force pulls on said first and second linkage members causing said third and fourth ramped surfaces to respectively move on said first and second ramped surface and apply an actuation force that moves said first and second friction members into engagement with said rotor and produce a braking force that is resisted by the engagement of the first and second carrier members with the second end of the support member to correspondingly retard the rotation of the rotor and effect a brake application.

8. The disc brake as recited in claim 1 wherein said first and second friction members have a first coefficient of friction and said third and fourth friction members have a second coefficient of friction that are combined to effect a uniform brake application.

9. A disc brake wherein first and second friction member retained in a first caliper fixed to a vehicle that are moved into engagement with a rotor to effect a brake application by an input force applied by a actuation arrangement connected to the first and second friction members, said actuation arrangement being **characterized by** a second caliper having a second housing connected to the first caliper through a pin and third and fourth friction member aligned with the rotor, a first linkage member connected to the second housing and to said first friction member through a first ramp surface and a second linkage member connected to the second housing and to said second friction member through a second ramp surface, and actuation means for moving said third and fourth friction members into engagement with the rotor to create a tangential force that causes said second caliper to pivot on said pin and provide an input force that is communicated through said first and second linkage members such that said first and second ramp surfaces move in said first housing and apply an actuation force that moves said first and second friction members into engagement with said rotor to produce a braking force that is resisted by the engagement of the first and second friction member with one of the first housing to retard the rotation of the rotor and effect a brake application.

10. The disc brake as recited in claim 9 wherein spring means immediately move said first and second friction member away from the rotor on termination of the actuation force.
